# EUROPÄISCHE PATENTSCHRIFT

(11) **EP 4 411 351 B1**
(45) Veröffentlichungstag und Bekanntmachung des Hinweises auf die Patenterteilung: **19.08.2026**
(21) Anmeldenummer: 24172954.0
(22) Anmeldetag: 05.05.2020
(51) Int. Cl.: D01G 31/00, G01N 21/89

(54) **SPINNEREIVORBEREITUNGSANLAGE UND VERFAHREN ZUR ERFASSUNG VON STÖRENDEN PARTIKELN**
SPINNING PREPARATION INSTALLATION AND METHOD FOR DETECTING INTERFERING PARTICLES
INSTALLATION DE PRÉPARATION DE FILATURE ET PROCÉDÉ DE DÉTECTION DE PARTICULES INTERFÉRENTES

(30) Priorität: 05.06.2019 DE 102019115138
(43) Veröffentlichungstag der Anmeldung: 07.08.2024
(62) Dokumentnummer(n) der früheren Anmeldung(en) nach Art. 76 EPÜ: 20725658.7 / 3 980 590
(73) Patentinhaber: Trützschler Group SE, 41199 Mönchengladbach (DE)
(72) Erfinder: Engels, Guido, 41569 Rommerskirchen (DE); März, Jürgen, 40591 Düsseldorf (DE)

(56) Entgegenhaltungen:
- EP-A1- 0 606 626
- EP-A1- 1 057 907
- EP-A1- 1 207 388
- EP-A1- 1 233 086
- EP-A2- 0 331 039
- WO-A1-99/50486
- CN-A- 108 796 681
- DE-A1- 10 347 240
- DE-A1- 102013 010 468
- DE-B4- 19 604 499

## Beschreibung

Die Erfindung betrifft eine Spinnereivorbereitungsanlage und ein Verfahren zum Erkennen von störenden Partikeln, insbesondere Trashteile, Nissen, Schalennissen, Dickstellen und/oder Fremdteilen in einem kardierten Faserflor.

Nach dem Stand der Technik ist es auf dem Gebiet der Textiltechnik bekannt, Nissen, Störpartikel oder Schmutzteile in einem Vlies, Faserband oder Garn zu detektieren. Die bekannten Verfahren unterscheiden sich hinsichtlich der Genauigkeit der ermittelten Werte und der Zuverlässigkeit im täglichen Betrieb einer Spinnerei, da die Bauteile mit einer erheblichen Verschmutzung und Temperaturbelastung dauerhaft gut funktionieren müssen. Die Erfassung von Nissen oder Verknotungen von Fasern kann im ausgebreiteten Faserflor oder im Faserband mit unterschiedlichen Methoden erfolgen. Bei der Detektion von Faserband sind umfangreichere Messvorrichtungen notwendig, da in der Regel nicht von außen in das Faserband hineingesehen werden kann. Demzufolge hat es sich etabliert, die Erfassung der Nissen oder Verknotungen unterhalb des Abnehmers oder nach dem Abnehmer durchzuführen. Dabei werden nicht die absoluten Nissen oder Verknotungen gezählt, sondern nur ein Teilbereich des Faserflors wird detektiert und dann anhand einer statistischen Auswertung auf die gesamte Produktionsmenge geschlossen.

Die DE 19604499 B4 offenbart einen Sensor zur Erfassung von Nissen und ähnlichen Störpartikeln, der in einem Vliesleitprofil über die Arbeitsbreite der Karde hin- und her verfahrbar angeordnet ist. Die konkave Oberfläche des Vliesleitprofiles, die zur Abstreichwalze hin angeordnet ist, weist eine zumindest teilweise durchsichtige Wand auf, durch die die Fasern mittels eines Sensors erfasst werden. Das vom Abnehmer abgenommene Vlies wird permanent, aber nicht berührend über diese durchsichtige Wand geführt, welches im praktischen Betrieb zu einer schnellen Verschmutzung führt, was sich auf das Messergebnis negativ auswirkt. Eine kurzfristige Reinigung des Vliesleitelementes setzt voraus, dass die Karde komplett abgeschaltet wird, also sowohl die Zufuhr von Faserflocken abgestellt wie auch die Drehzahl der rotierenden Bauteile auf null gesetzt wird. Erst dann kann das Vliesleitprofil gereinigt werden. Diese Unterbrechung des Kardierbetriebes ist unerwünscht und reduziert die mögliche Produktionsleistung. Ein weiterer Nachteil ist die verfahrbare Anordnung des Sensors im Vliesleitprofil, was sehr aufwändig herstellbar und aufgrund der beim Verfahren mitgeschleppten Kabel störanfällig ist.

Die EP1057907 A1 offenbart eine Spinnereivorbereitungsanlage mit einer Putzerei- oder Öffnerlinie und einer nachfolgenden Karde. Die Karde weist einen Sensor zur Erfassung von störenden Partikeln auf, wobei die Sensordaten in einer Steuerung zusammengefasst und ausgewertet werden.

Die WO99/50486 offenbart ein Vliesleitelement mit einem ortsfest integrierten Sensor, der den Faserflor auf der Abnehmerwalze detektiert. Hierzu weist das Vliesleitelement ein lichtdurchlässiges Fenster auf, durch das der Sensor die Mantelfläche der Abnehmerwalze detektieren kann.

Entsprechend liegt der Erfindung die Aufgabe zugrunde, eine Spinnereivorbereitungsanlage und ein Verfahren dahingehend auszubilden, dass störende Partikel, insbesondere Trashteile, Nissen, Schalennissen, Dickstellen und/oder Fremdteilen in einem kardierten Faserflor in kurzer Zeit erkannt werden können.

Die Erfindung löst die gestellte Aufgabe durch eine Spinnereivorbereitungsanlage und ein Verfahren mit den in Anspruch 1 bzw. 8 angegebenen Merkmalen. Vorteilhafte Weiterbildungen der Erfindung sind in den abhängigen Ansprüchen definiert. Die erfindungsgemäße Spinnereivorbereitungsanlage umfasst zumindest eine Putzerei- oder Öffnungslinie mit mindestens einer steuerbaren Maschine, z.B. einem Fremdteilausscheider oder Mischer oder Reiniger, sowie mindestens zwei Karden, wobei die jeweilige Karde mindestens einen Sensor zur Erfassung von störenden Partikeln, insbesondere Trashteile, Nissen, Schalennissen, Dickstellen und/oder Fremdteilen in dem kardierten Faserflor aufweist.

Die Erfindung ist dadurch gekennzeichnet, dass die Sensordaten der Karden in einer Steuerung zusammengefasst und ausgewertet werden, wobei über ein Eingabemodul zumindest eine Führungsgröße für die Faserqualität der Steuerung zuführbar ist und die Steuerung mindestens eine Stellgröße an eine Steuerung einer Maschine der Putzerei- und Öffnungslinie übermittelt. Die Maschine der Putzerei- und Öffnungslinie kann beispielsweise ein Fremdteilausscheider oder Mischer oder Reiniger sein. Die übermittelte Stellgröße kann beispielsweise die Detektionsempfindlichkeit des Fremdteilausscheiders oder das Mischungsverhältnis unterschiedlicher Fasern im Mischer sein. Durch die Auswertung der Daten des Vliesleitelementes einer Karde in einer der Spinnereivorbereitungsanlage übergeordneten Steuerung kann die Einstellung einzelner Maschinen der Spinnereivorbereitung beeinflusst werden, so dass hiermit ein Regelkreislauf geschaffen wird.

Vorteilhafterweise erfolgt die Zusammenfassung der Ergebnisse der Sensordaten von mindestens zwei Karden in vorbestimmter Weise, z.B. durch Aufsummieren, Mittelwertbildung, statistischer Auswertung, Klassifizierung, Musteranalyse oder mit Methoden der künstlichen Intelligenz. Je nach Umfang kann hierzu ein weiterer Rechner innerhalb der Spinnereivorbereitung zum Einsatz kommen, welcher auch die Kommunikation mit der zu steuernden Maschinen der Spinnereivorbereitungsanlage aufnehmen kann. Über die Zusammenfassung der Daten von mindestens zwei Karden kann in kürzerer Zeit eine größere Anzahl an Daten zusammengetragen werden, als dies nur mit den Daten einer Karde möglich ist. Die Zeit zur Auswertung der Faserqualität verringert sich erheblich. Auch hier erfolgt über eine übergeordnete Steuerung in der Spinnereivorbereitungsanlage mittels statistischer Auswertung eine Ermittlung beispielsweise der Nissenzahl oder eine qualitative Aussage zum Anteil der Kurzfasern. Durch die Auswertung der Daten aus mehreren Karden erhöht sich die Anzahl der Messwerte, so dass in sehr kurzer Zeit der Maschinenführer ggfs. einen Warnhinweis auf eine fehlerbehaftete Produktion erhält, bevor das erzeugte Kardenband in der nächsten Bearbeitungsstufe weiterverarbeitet wird. Vorzugsweise ist die Steuerung ausgebildet, die zusammengefassten und ausgewerteten Sensordaten nach vorgegebenen Kriterien auf einem Bildschirm darzustellen.

In einer weiteren Ausführungsform ist die übergeordnete Steuerung zum Zusammenfassen und Auswerten der Daten der mindestens einen Karde und zur Ermittlung der Stellgrößen in der Steuerung der zu steuernden Maschine selbst integriert, wobei diese Einzeldaten von den Karden über entsprechende Datenübertragungskanäle von den Karden oder den erfindungsgemäßen Vliesleitelementen abgefragt werden können.

Hierzu ist die Steuerung ausgebildet, bei fehlerhaftem Faserflor ein optisches, akustisches oder elektrisches Signal auszugeben, so dass der nächste Bearbeitungsschritt, beispielsweise ein Verstrecken, Kämmen oder die Herstellung von Vorgarn, unterbrochen wird oder erst gar nicht startet. Das erfindungsgemäße Verfahren zur Erfassung von störenden Partikeln, insbesondere Trashteile, Nissen, Schalennissen, Dickstellen und/oder Fremdteilen in einem kardierten Faserflor efolgt mittels Sensoren, die in einem Vliesleitelement mit Blickrichtung auf den Abnehmer mindestens einer Karde den Faserflor detektierten, wobei die Daten der Sensoren der mindestens zwei Karden in einer Steuerung der Spinnereivorbereitungsanlage zusammengefasst und ausgewertet werden und mit einer Führungsgröße abgeglichen werden, wobei die Steuerung der Spinnereivorbereitungsanlage ausgebildet ist, mit der Steuerung einer vorgelagerten steuerbaren Maschine zu kommunizieren. Über die Erfassung der störenden Partikel und die gemeinsame Auswertung der Daten mehrerer Karden erfolgt eine summierte Auswertung der Daten, die nach unterschiedlichen Kriterien erfolgen kann. Durch geeignete Auswahl der Kriterien ist es möglich, mindestens eine vorgelagerte steuerbare Maschine optimiert einzustellen, so dass das Kardenband eine bessere Qualität aufweist. Die steuerbare Maschine kann als Fremdteilausscheider oder Mischer oder Reiniger ausgebildet sein. Die Ansteuerung des Fremdteilausscheiders kann die Empfindlichkeit der Ausscheiderate von störenden Partikeln erhöhen oder verringern, so dass die Produktion mit mehr oder weniger Abfall betrieben werden kann. Durch die Ansteuerung des Mischers und/oder Reinigers kann beispielsweise eine Veränderung des Rohstoffs durch ein verändertes Mischungsverhältnis oder höhere Reinigungsintensität teilweise kompensiert werden.

Eine Karde zur Verwendung in der erfindungsgemäßen Spinnereivorbereitungsanlage umfasst eine Vorrichtung zum Erkennen von störenden Partikeln, insbesondere Trashteile, Nissen, Schalennissen, Dickstellen und/oder Fremdteilen in einem kardierten Faserflor, wobei die Vorrichtung mindestens einen Sensor umfasst, der ortsfest in einem Vliesleitelement angeordnet ist, das im Übergang von einem Abnehmer zu einer Abstreichwalze angeordnet ist, wobei der mindestens eine Sensor den Faserflor auf dem Abnehmer detektiert. Dadurch, dass der Sensor den Faserflor detektiert, der sich in den Zähnen der Garnitur des Abnehmers befindet, erfolgt eine geringere Verschmutzung des Bereiches, durch die die Sensorstrahlen hindurchdringen müssen. Der Faserflor streift damit nur die annähernd senkrechte Vorderseite des Vliesleitelementes, die damit deutlich weniger verschmutzt, als die waagerechte konkave Oberseite. Durch diese stehende annähernd senkrechte Anordnung der Vorderseite gegenüber dem Abnehmer lagern sich im Betrieb weniger Schmutzpartikel auf dieser ab, als nach dem Stand der Technik. Der Spalt zwischen Vliesleitelement und Abnehmer ist sehr eng ausgeführt, so dass der Faserflor die senkrechte Vorderseite des Vliesleitelementes teilweise berührt und durch den permanenten Materialfluss damit kontinuierlich reinigt. Es ergibt sich damit eine längere Standzeit, bis das Vliesleitelement bzw. ein lichtdurchlässiges Element, dass die Sensorstrahlen durchdringen, gereinigt werden muss. Innerhalb des Vliesleitelementes ist nicht mehr ein einzelner Sensor verfahrbar angeordnet, sondern mindestens ein Sensor ist ortsfest innerhalb des Vliesleitelementes angeordnet. Eine Störung aufgrund gebrochener Schleppkabel wird damit vermieden.

Dabei weist das Vliesleitelement eine zum Abnehmer hin angeordnete Vorderseite mit mindestens einem lichtdurchlässigen Element auf. Das lichtdurchlässige Element kann nur im Detektionsbereich des Sensors angeordnet sein, oder alternativ sich über die Arbeitsbreite der Karde erstrecken, beispielsweise als durchsichtige Wand der Vorderseite des Vliesleitelementes.

Dadurch, dass mindestens drei Sensoren, vorzugsweise mindestens fünf Sensoren, besonders bevorzugt mindestens neun Sensoren innerhalb des Vliesleitelementes ortsfest angeordnet sind, kann über eine größere Datenmenge die Genauigkeit und die Zeit zur Auswertung beeinflusst werden. Über die Anzahl der Sensoren kann in Abhängigkeit des Kundenwunsches ein Kompromiss zwischen Genauigkeit der Partikelerkennung und den Kosten der Vorrichtung gefunden werden.

In einer bevorzugten Ausführungsform weist jeder Sensor eine Sensorplatine mit einem Bilderfassungssensor und einem Objektiv auf, wobei zwischen der Sensorplatine und dem Polarisationsfilter ein Rechner, eine Trägerplatte und eine Beleuchtungseinheit angeordnet sind. Durch diesen Aufbau des Sensors wird ein möglichst weiter Abstand der Sensorplatine zum Faserflor erreicht, was in diesem kleinen Bauraum nur mit einem die Sensorstrahlen umzulenkenden Spiegel möglich wäre.

Dabei durchdringt das Objektiv des Sensors eine Platte mit dem Rechner, die Trägerplatte und die Beleuchtungseinheit. Es wird damit ein umgekehrter Aufbau eines Sensors realisiert, wie dies nach dem Stand der Technik bekannt ist, wobei der Sensor im größtmöglichen Abstand in diesem kleinen Bauraum zum zu detektierenden Objekt angeordnet ist.

Vorzugsweise ist die Trägerplatte ausgebildet, den Rechner und die Sensorplatine vor elektromagnetischer Strahlung zu schützen. Damit müssen der Rechner und die Sensorplatine nicht mehr separat abgekapselt werden. Hierzu besteht die Trägerplatte beispielsweise aus einem Metall.

Der Rechner ist ausgebildet, die Bilddaten des Bilderfassungssensors durch Algorithmen auszuwerten. Die detektierten Störpartikel werden klassifiziert und gezählt bzw. in Statistiken erfasst. Dabei kann die Klassifizierung nicht nur die Art der Störpartikel, das heißt Nissen, Schalennissen, Trashpartikel, Fremdteile und die Art der Fremdteile, sondern auch weitere Eigenschaften wie Größen, Kontur, Struktur, Farbe oder die Oberflächenbeschaffenheit enthalten. Des Weiteren ist es möglich, anhand der Bilddaten Kennwerte über die Fasern bzw. den Faserverbund wie z.B. Wolkigkeit, Dünnstellen, Dickstellen, Struktur, Orientierung der Fasern oder den Kurzfasergehalt zu ermitteln. Diese Informationen können von einer übergeordneten Steuerung automatisiert genutzt werden, um z.B. die Karde oder auch Maschinen der Putzerei - z.B. den Fremdteilausscheidern - gezielt dahingehend zu optimieren, dass der Störpartikelgehalt reduziert bzw. die Faserkennwerte optimiert werden. Das erfindungsgemäße Vliesleitelement wird damit zu dem Messorgan einer Regelschleife, um die Betriebsparameter der Karde selbst oder der speisenden Maschinen zu regeln bzw. zu optimieren. Die Maschinen passen sich damit automatisiert an veränderte Ausgangsmaterialien oder an veränderte Rand- oder Verarbeitungsbedingungen an, so dass eine konstante Qualität des Ausgangsmaterials der Karde erreicht wird.

Die Ermittlung der Informationen zur Optimierung der Maschinen ist zeitaufwendig. Zum einen sind die Rechenalgorithmen zeitintensiv, zum anderen müssen aber insbesondere für die Ermittlung des Störpartikelgehaltes an Fremdteilen sehr viel mehr Einzelbilder ausgewertet werden, als es für die Bestimmung von beispielsweise Nissen, Schalennissen oder Trashpartikeln nötig ist.

Vorzugsweise ist daher jedem Sensoren eines Vliesleitprofiles ein eigener Rechner zugeordnet, welcher die Ergebnisse der einzelnen Sensoren aufsummiert oder zusammenfasst. Durch die Verwendung von mindestens zwei Sensoren erfolgt eine parallele Erfassung und Auswertung der Sensordaten. Durch die Zusammenfassung der Ergebnisse aller Sensoren innerhalb des erfindungsgemäßen Vliesleitprofiles können damit der Störpartikelgehalt bzw. die Faserkennwerte wesentlich schneller bestimmt werden. Die Zusammenfassung der Ergebnisse der Sensoren erfolgt dabei in vorbestimmter Weise, z.B. durch Aufsummieren, Mittelwertbildung, statistischer Auswertung, Klassifizierung, Musteranalyse oder mit Methoden der künstlichen Intelligenz. Je nach Umfang kann hierzu ein weiterer Rechner innerhalb des Vliesleitprofiles zum Einsatz kommen, welcher auch die Kommunikation des Vliesleitelementes mit der Karde oder den anderen Maschinen der Spinnereianlage aufnehmen kann.

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigen:
- Fig. 1: eine schematische Seitenansicht einer Spinnereivorbereitungsmaschine in Form einer Karde;
- Fig. 2: eine vergrößerte Darstellung eines eingebauten Vliesleitelementes;
- Fig. 2a: eine Detaildarstellung des Vliesleitelementes;
- Fig. 3: eine seitliche Darstellung des Sensors im Vliesleitelement;
- Fig. 4: ein erstes Ausführungsbeispiel einer Sensoranordnung in einem Vliesleitelement;
- Fig. 4a: ein zweites Ausführungsbeispiel einer Sensoranordnung in einem Vliesleitelement;
- Fig. 5: eine Spinnereivorbereitungsanlage mit einer Anordnung mehrerer Karden mit einer Vorrichtung zum Zusammenfassen und Auswerten von Daten.

Gleiche Merkmale in der Zeichnung sind jeweils mit gleichen Bezugszeichen versehen. An dieser Stelle versteht sich, dass die Zeichnung lediglich vereinfacht und insbesondere ohne Maßstab dargestellt ist.

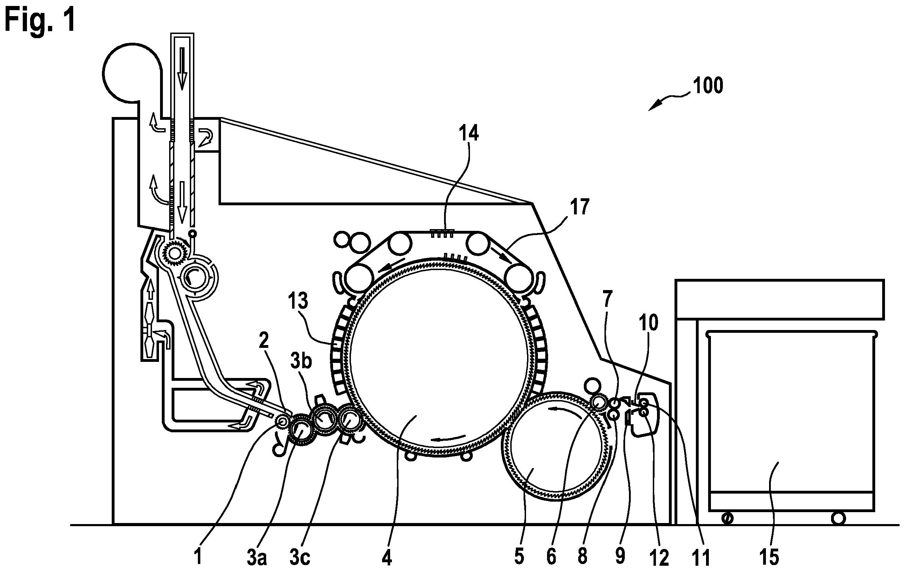

Fig. 1 zeigt eine Karde 100, bei der Faserflocken über einen Schacht zu einer Speisewalze 1, einem Speisetisch 2, über mehrere Vorreißer 3a, 3b, 3c, zu der Trommel 4 oder dem Tambour geleitet werden. Auf der Trommel 4 werden die Fasern der Faserflocken mittels feststehender Kardierelemente 13, Absaughauben und Ausscheidemesser und mittels an einem Wanderdeckelsystem 17 angeordneter umlaufender Kardierelemente, die als Deckelstäbe 14 ausgebildet sind, parallelisiert und gereinigt. Der entstehende Faserflor 16 wird nachfolgend über einen Abnehmer 5, eine Abstreichwalze 6 und mehrere Quetschwalzen 7, 8, zu einem Vliesleitelement 9 gefördert, der den Faserflor mit einem Flortrichter 10 zu einem Faserband umformt, das über Abzugswalzen 11, 12 an eine nachfolgende Verarbeitungsmaschine oder eine Kanne 15 übergeben wird. Die Einstellung der Deckelstäbe 14 und der Kardierelemente 13 zur Trommel 4 (Kardierspalt) erfolgt über hier nicht dargestellte Gleitleisten, die keilförmig gegeneinander ausgerichtete Elemente aufweisen können.

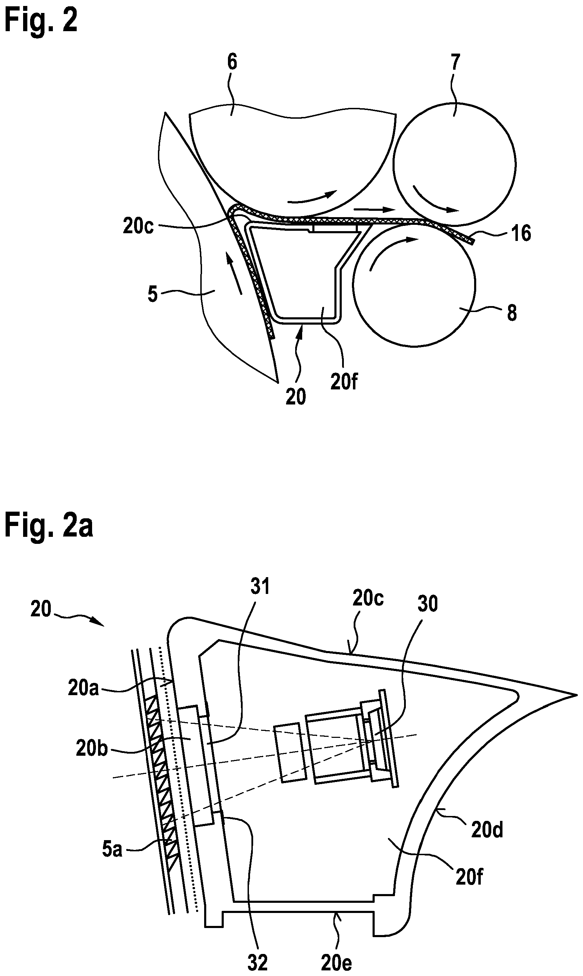

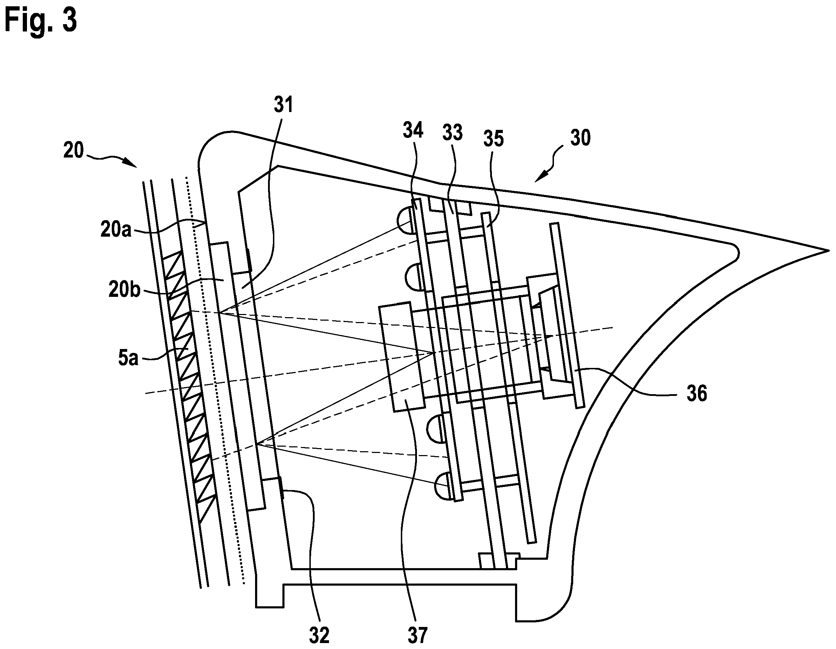

In Figur 2 und 2a ist die Anordnung des Vliesleitelementes 20 zwischen dem Abnehmer 5, der Abstreichwalze 6 und einer Quetschwalze 7 dargestellt, bei dem der Faserflor 16 durch die Abstreichwalze 6 vom Abnehmer 5 abgenommen und entlang einer konkaven Oberseite 20c des Vliesleitelementes 20 zum Flortrichter 10 geführt wird. Das Vliesleitelementes 20 wird im Wesentlichen durch vier Seiten 20a, 20c, 20d, 20e gebildet, die einen Hohlraum 20f umschließen. Die Vorderseite 20a weist zumindest teilweise ein lichtdurchlässiges Element 20b auf, dass ausgebildet ist, den Erfassungsbereich bzw. den Sichtbereich eines im Hohlraum 20f befindlichen Sensors 30 auf den in der Garnitur 5a des Abnehmers 5 befindlichen Faserflor 16 zu ermöglichen. Das lichtdurchlässige Element 20b kann nur im Bereich des Sichtwinkels eines Sensors 30 angeordnet sein, oder sich als durchgehendes lichtdurchlässiges Element 20b zumindest teilweise oder vollständig über die Arbeitsbreite der Karde 100 erstrecken. Die Vorderseite 20a des Vliesleitelementes 20 ist damit in einem kleinen Abstand zur Oberfläche des Abnehmers 5 ausgerichtet. Die konkave Oberseite 20c des Vliesleitelementes 20 leitet den Faserflor 16 von der Abstreichwalze 6 zu den Quetschwalzen 7, 8. Der Sensor 30 detektiert den Faserflor 16, der sich noch in den Zähnen der Garnitur 5a des Abnehmers 5 befindet. Der Faserflor 16 streift damit die annähernd senkrecht angeordnete Vorderseite 20a des Vliesleitelementes 20 und damit auch kontinuierlich über das lichtdurchlässige Element 20b, das damit deutlich weniger verschmutzt, als die waagerecht angeordnete konkave Oberseite 20c. Bei einem in der waagerecht angeordneten konkaven Oberseite 20c angeordneten lichtdurchlässigen Element, dass durch den Faserflor 16 nicht vollflächig berührt wurde, könnte sich eine Verschmutzung ablagern. Es ergibt sich damit eine längere Standzeit, bis das Vliesleitelement 20 bzw. das lichtdurchlässige Element 20b gereinigt werden muss. Innerhalb des Vliesleitelementes 20 ist nicht mehr ein einzelner Sensor 30 verfahrbar angeordnet, sondern mindestens ein Sensor 30 ist ortsfest angeordnet. Bei Anordnung von mehreren ortsfesten Sensoren 30 innerhalb des Vliesleitelementes sind diese in einem regelmäßigen Abstand zueinander angeordnet. Das lichtdurchlässige Element 20b kann als Glas- oder Kunststoffscheibe ausgebildet sein, hinter dem ein Polarisationsfilter 31 angeordnet ist. Der Polarisationsfilter 31 ist also zwischen dem lichtdurchlässigen Element 20b und dem Sensor 30 angeordnet. Der Polarisationsfilter 31 ist für eine zirkulare Polarisation ausgebildet, wodurch die reflektierenden Strahlen des Sensors 30, welche von einer glänzenden Oberfläche, beispielsweise der metallischen Garnitur reflektiert werden, ausgeblendet werden. Die Reflexion der Strahlen an den matten Fasern und Störpartikeln bleiben hingegen für den Sensor 30 sichtbar. Der Sensor 30 erfasst damit nur die Fasern und darin enthaltenen Störpartikel des Faserflors 16 und kann über die Bildauswertung Dickstellen bzw. Verknotungen, Nissen, Schalennissen oder auch Fremdteile erkennen. Hierzu wird Weißlicht erzeugt, mit dem in Kombination mit dem Polarisationsfilter die Garnitur 5a ausgeblendet werden kann. Innerhalb des Vliesleitelementes 20 wird der Polarisationsfilter 31 von einer Referenzfolie 32 umrahmt, mit der ein Weißabgleich durchgeführt werden kann. Die Darstellung des Sensors 30 in der Figur 2a ist nur schematisch. Der Aufbau des Sensors 30 ist in Figur 3 detailliert beschrieben.

Die Integration eines kostengünstigen Sensors zur Bildverarbeitung setzt einen minimalen Abstand des Sensors zum überwachenden Objekt voraus. Ist dieser Abstand aufgrund eines zu engen Bauraumes nicht realisierbar, wird mit umlenkenden Spiegeln gearbeitet, was aber den Nachteil der unkontrollierten Verschmutzung mit sich bringt, sowie eine genaue Justage des Spiegels erforderlich macht. Aus diesem Grund wurde der hier verwendete Sensor 30 neu konfiguriert und geht von einer Trägerplatte 33 aus, von dem aus die anderen Bauteile mit Abstand befestigt sind. Die Trägerplatte 33 ist innerhalb des Vliesleitelementes 20 ortsfest angeordnet, beispielsweise an nicht weiter bezeichneten Absätzen oder Nuten der Oberseite 20c und Unterseite 20e. Ausgehend von der Trägerplatte 33 ist zum lichtdurchlässigen Element 20b eine Beleuchtungseinheit 34 angeordnet, die als LED-Platine ausgebildet sein kann. Die Beleuchtungseinheit 34 ist ebenfalls als plattenförmiges Bauteil ausgebildet, auf der die LED's oder andere Lichtelemente angeordnet sind. Die LED's können ggfs. auch mit weiteren hier nicht dargestellten Linsen oder Linsenarrays kombiniert werden. Die Beleuchtungseinheit 34 ist parallel zur Trägerplatte 33 angeordnet. Hinter der Trägerplatte 33 ist auf einer Platte ein Rechner 35 angeordnet, der die erfassten Daten sofort auswerten kann. Die Ausbildung jedes Sensors 30 mit einem eigenen Rechner 35 bewirkt eine Parallelverarbeitung der ermittelten Daten, so dass die ermittelten Werte schneller zur Verfügung stehen. Von der Trägerplatte 33 aus hinter der Platte mit dem Rechner 35 ist die Sensorplatine 36 angeordnet, die damit den maximalen Abstand in diesem Bauraum zu den zu detektierenden Fasern aufweist. Die Sensorplatine 36 kann beispielsweise als CCD- oder CMOS-Sensor ausgebildet sein, mit der sich einzelne Bilder erfassen lassen.

Damit die Sensorplatine 36 in diesem kleinen Bauraum mit einem Objektiv 37 angeordnet werden kann, weisen die Platte für den Rechner 35, die Trägerplatte 33 und die Beleuchtungseinheit 34 in einer Flucht eine nicht weiter bezeichnete Öffnung auf, durch die das Objektiv 37 hindurch ragt. Alle Bauteile (34, 35, 36) werden mittels Bolzen oder Abstandshalter zur Trägerplatte 33 parallel ausgerichtet und an dieser befestigt. Dadurch, dass das Objektiv 37 die Rechnerplatte 35, die Trägerplatte 33 und die Beleuchtungseinheit 34 durchdringt, kann die Sensorplatine 36 bei diesem Bauraum ohne Verwendung eines Spiegels mit einem maximalen Abstand zu den zu detektierenden Fasern angeordnet werden. Vorteilhafterweise ist die Trägerplatte 33 ausgebildet, den Rechner 35 und die Sensorplatine 36 vor unzulässig hohen elektromagnetischen Strahlen zu schützen. Bei einer Bildaufnahme wird die Beleuchtungseinheit 34 im Blitzbetrieb mit einer sehr hohen Stromstärke kurzzeitig arbeiten, wodurch die entstehende elektromagnetische Strahlung durch beispielsweise eine metallische Trägerplatte 33 von dem Rechner 35 und der Sensorplatine 36 abgeschirmt.

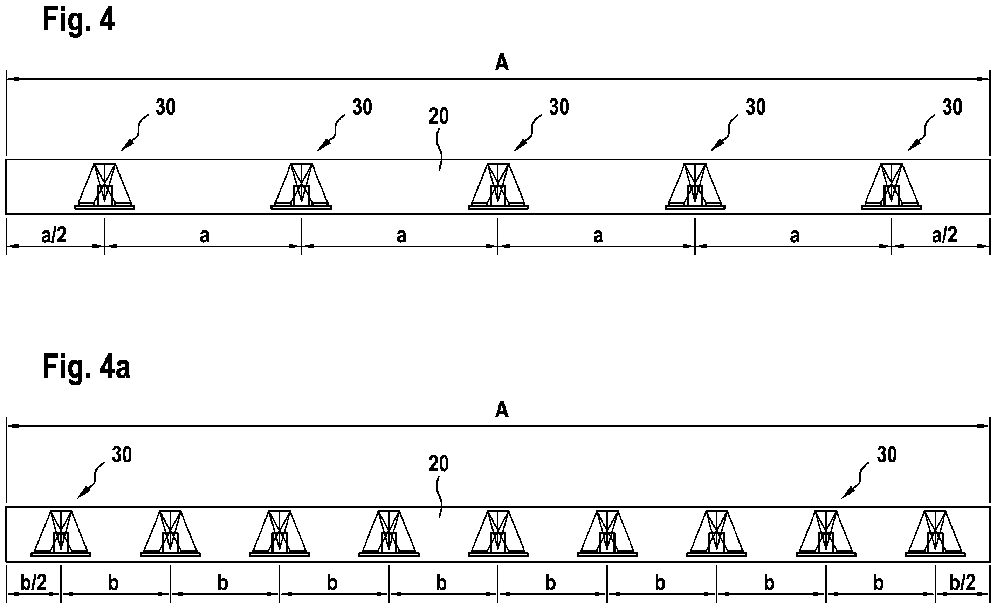

In Figur 4 sind innerhalb des Vliesleitelementes 20 beispielsweise fünf Sensoren 30 vorzugsweise gleichmäßig im Abstand a über die Arbeitsbreite A der Karde verteilt. Bei einer Breite der Trommel 4 von beispielsweise 1280 mm ergibt sich eine Arbeitsbreite A von ca. 1180 mm, die von fünf Sensoren mit jeweils einer Erfassungsbreite von 20 bis 30 mm detektiert wird. In der Auswertung der Steuerung der Karde ergeben sich damit für jeden Sensor eine eigene Spur, die detektiert wird. Bei feststehenden Sensoren 30 hat sich bei einer Breite der Trommel 4 von 1000 mm eine Mindestanzahl von drei Sensoren 30 innerhalb des Vliesleitprofiles 20 als vorteilhaft ergeben, mit denen eine hinreichende Genauigkeit zur Nissenzahl ermittelt werden kann. Im Hinblick auf die Kosten der Sensoren 30 und die Breite der Trommel 4 hat sich die Anordnung von fünf Sensoren 30 als optimal erwiesen, mit denen mit sehr hoher Genauigkeit die Nissenzahl ermittelt werden kann. Die fünf Sensoren 30 sind vorzugsweise mit gleichem Abstand a über die Arbeitsbreite A der Karde innerhalb des Vliesleitelementes 20 ortsfest angeordnet. Zur Erfassung der Nissen müssen rund 10.000 Bilder über die Sensoren pro Messwert ermittelt und ausgewertet werden. Als ein Messwert wird bei einer Kardenproduktion von beispielsweise 80kg/h eine auf dem Abnehmer 5 durchlaufende Menge an Faserflor 16 von 100 Metern gebildet, von dem rund 10.000 Bilder ermittelt werden. Bei ungleichmäßiger Breitenverteilung kann über die Anzahl der Spuren, in diesem Fall mit fünf Sensoren 30, ein Bandnissenmittelwert mit einem Fehler von 3 % ermittelt werden. Bei Verwendung von nur drei Sensoren 30 erhöht sich der Fehler des Bandnissenmittelwertes auf 12 %. Bei Verwendung von neun Sensoren (Figur 4a) 30, die in einem Abstand b zueinander angeordnet sind, verringert sich der Fehler des Bandnissenmittelwertes auf 1 %. Die Verwendung einer hohen Anzahl von Sensoren 30 erhöht nicht nur die Genauigkeit bei der Ermittlung der Nissen, sondern verkürzt auch die Zeit zur Bestimmung des Messwertes, da mehr Bilder gleichzeitig erfasst werden und die Rechner 35 diese gleichzeitig parallel verarbeiten. Beispielsweise beträgt die Messzeit bei drei Sensoren 30 ca. 40 Sekunden, bei fünf Sensoren 30 ca. 30 Sekunden und bei neun Sensoren 30 ca. 15 Sekunden. Aufgrund des begrenzten Bauraumes innerhalb des Vliesleitelementes 20 bei einer Trommelbreite von 1000 mm bis 1500 mm hat sich die Anordnung von drei bis neun ortsfest angeordneten Sensoren zur Bestimmung der Nissen als optimal herausgestellt. Zum einen steht über die Arbeitsbreite A ein ausreichender Bauraum zur Verteilung der Sensoren 30 zur Verfügung, zum anderen ist eine ausreichende Genauigkeit in Kombination mit einer Messgeschwindigkeit gewährleistet, und letztendlich halten sich die Kosten im bezahlbaren Rahmen.

Auch wenn in diesem Ausführungsbeispiel nur ein gleichmäßiger Abstand a, b der Sensoren 30 zueinander dargestellt ist, kann dieser auch ungleichmäßig ausgebildet sein. Dann muss ggfs. der Auswertealgorithmus der Daten angepasst werden. Es daher vorteilhaft sein, die Sensoren 30 von der Mitte des Faserflors 16 in einem größeren oder kleineren Abstand zueinander anzuordnen, da die Erfassung von bestimmten Nissen, Dickstellen oder Fremdteilen aufgrund der spezifischer Kardenkonstruktion vermehrt im Randbereich (wegen Seitenflug) oder in der Mitte des Faserflors 16 (wegen Kardierspaltunterschiede über die Trommelbreite) auftreten kann.

Sollen die Sensoren 30 auch zur Erfassung von Fremdteilen genutzt werden, müssen alle Sensoren 30 zusammen rund 25.000.000 Bilder ermitteln. Bei der Verwendung von fünf Sensoren 30 in einem Vliesleitelement 20 muss demzufolge jeder Sensor 5.000.000 Bilder erzeugen, bis eine zuverlässige Aussage zu dem Vorhandensein von Fremdteilen möglich ist. Eine entsprechende Menge Faserflor muss damit detektiert werden, wodurch sich der Messvorgang mit der Auswertung auf rund 18 Stunden hinzieht. Bei Verwendung von neun Sensoren 30 ergibt sich eine Mess- und Auswertezeit von immer noch 10 Stunden, was bedeutet, dass sich die Kardenproduktion zumindest in der Verarbeitung eines Vorgarnes befindet und beim Auftreten eines gravierenden Fehlers vernichtet werden muss.

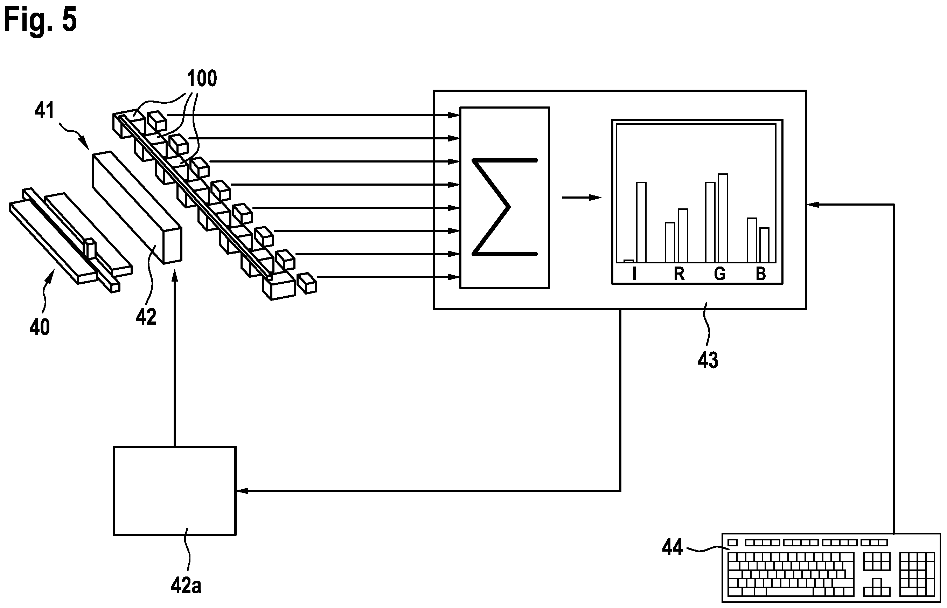

Um diesen Prozess zu verkürzen, schlägt die Erfindung vor, die Daten der Sensoren 30 aus den Vliesleitelementen 20 von mindestens einer Karde 100 in einer Steuerung 43 zusammenzufassen und gemeinsam auszuwerten. Figur 5 zeigt einen Ballenöffner 40, der eine Partie von Faserballen öffnet und einzelne Faserflocken einer Putzerei 41 zuführt. Innerhalb der Putzerei 41 erfolgt eine Auflösung der Faserflocken, eine erste Reinigung und Mischung der Fasern, sowie die Ausscheidung von Fremdteilen (Kunststoff, Verpackungsmaterial, Stängel, Metall, etc.) in einem Fremdteilausscheider 42. Über nicht dargestellte Fasertransportleitungen werden die Faserflocken den Karden 100 zugeführt. Eine übergeordnete Steuerung 43 summiert die einzelnen Daten der Sensoren 30 aus den Vliesleitelementen 20 der einzelnen Karden 100 auf und wertet diese nach unterschiedlichen Kriterien aus. Die Auswertung kann sich auf den Anteil der Kurzfasern beziehen, oder auf Fremdteile, oder auf die Zahl der Nissen oder Knoten oder auf Kennwerte wie Wolkigkeit, Dünn-/Dickstellen oder Faserorientierung. Eine Anzeige ist ausgebildet, unterschiedliche Faserarten darzustellen, ebenso wie beispielsweise Fremdteile, Nissen oder Schmutzpartikel. Über ein Eingabemodul 44 kann eine vorgegebene Abfallmenge oder Ausscheiderate eingegeben werden, so dass innerhalb der Steuerung 43 bereits eine Optimierung der Daten erfolgen kann. Die Steuerung 43 übermittelt die neuen Vorgaben mit den optimierten Daten an die Steuerung 42a des Fremdteilausscheiders 42, der dadurch je nach Qualitätsanforderung und Ausgangsmaterial feiner oder grober eingestellt werden kann. Ziel ist die Optimierung der Einstellung, so dass die geforderte Qualität des Ausgangsmaterials (Faserflor) der Karde erreicht und gehalten wird. Dabei darf die Empfindlichkeitseinstellung des Fremdteilausscheiders 42 allerdings nicht so hoch gewählt werden, dass unnötig viel Abfall ohne Nutzen entsteht. Hierzu ist es erforderlich, nur die Parameter der Empfindlichkeitseinstellung zu modifizieren, welche zum Erkennen genau der Fremdteile erforderlich sind, welche nach dem Fremdteilausscheider 42 in der Karde von den Sensoren 30 in den Vliesleitelementen 20 aktuell noch detektiert werden. Erreicht wird dies dadurch, dass die von der Steuerung 43 zusammengefassten Daten neben der Anzahl der Fremdteile auch deren Eigenschaften wie Farbe, Größen, Kontur, Struktur, Art oder Oberflächenbeschaffenheit enthalten. Die Steuerung 42a des Fremdteilausscheiders 42 kann daraufhin gezielt die erforderlichen Parameter optimieren. Werden z.B. von der Steuerung 43 noch viele rote Fremdteile detektiert, aber kaum grüne, so werden in der Steuerung 42a die Empfindlichkeitsparameter für die Erkennung der Farbe Rot optimieren, wohingegen der Parameter für die Farbe Grün unverändert bleibt oder ggfs. sogar mit einer unempfindlicheren Einstellung betrieben werden, damit die Gesamtausscheiderate und damit die Gesamtabfallmenge innerhalb der Vorgabewerte bleibt.

Die Zusammenfassung der Daten der Sensoren 30 aus den Vliesleitelementen mehrerer Karden 100 in der Steuerung 43 verkürzt die Zeit zur Erfassung der erforderlichen Bildmenge und reduziert die Zeit zur Verarbeitung der Daten. Im Ergebnis können Fehler im Faserflor über die Fremdteilerkennung bei 3 Sensoren pro Vliesleitelement und Karde nach 3 Stunden erkannt werden, bei 5 Sensoren pro Vliesleitelement und Karde nach 2 Stunden, und bei 9 Sensoren pro Vliesleitelement und Karde nach 1 Stunde. Damit kann eine mögliche fehlerbehaftete Kardenproduktion so frühzeitig zurückgehalten werden, bevor die Weiterverarbeitung in der nachfolgenden Spinnerei beginnt.

Die Zusammenfassung der Daten der Sensoren 30 aus den Vliesleitelementen 20 aus mindestens zwei Karden in der Steuerung 43 ergibt noch einen weiteren Vorteil. Stellt die Steuerung 43 fest, dass sich die Daten der Vliesleitelemente 20 gleichzeitig oder gleichartig in allen Karden verändern, so kann davon ausgegangen werden, dass dies eine gemeinsame Ursache hat wie etwa eine Veränderung im Rohstoff, eine Veränderung an einer oder mehreren Maschinen oder Putzereilinien oder eine gemeinsame Veränderung der Verarbeitungsbedingungen wie z.B. der Temperatur oder Feuchtigkeit in der Spinnereivorbereitung. Ist die Veränderung dagegen nur an einer Karde zu beobachten, so findet man die Ursache eher an der Karde selbst. Der Vergleich der Daten von mindestens zwei Karden in der Steuerung 43 kann also dazu dienen, genauer zu ermitteln, an welcher Maschine eingegriffen werden muss, um die gewünschte Qualität zu erreichen.

### Bezugszeichen

- 100: Karde

- 1: Speisewalze
- 2: Speisetisch
- 3a, 3b, 3c: Vorreißer
- 4: Trommel
- 5: Abnehmer
- 5a: Garnitur
- 6: Abstreichwalze
- 7, 8: Quetschwalze
- 9: Vliesleitelement
- 10: Flortrichter
- 11, 12: Abzugswalzen
- 13: Kardierelement
- 14: Deckelstab
- 15: Kanne
- 16: Faserflor
- 17: Wanderdeckelsystem

- 20: Vliesleitelement
- 20a: Vorderseite
- 20b: Element
- 20c: Oberseite
- 20d: Rückseite
- 20e: Unterseite
- 20f: Hohlraum

- 30: Sensor
- 31: Polarisationsfilter
- 32: Referenzfolie
- 33: Trägerplatte
- 34: Beleuchtungseinheit
- 35: Rechner
- 36: Sensorplatine
- 37: Objektiv

- 40: Ballenöffner
- 41: Putzereilinie
- 42: Fremdteilausscheider
- 42a: Steuerung
- 43: Steuerung
- 44: Eingabemodul

- A: Arbeitsbreite
- a: Abstand
- b: Abstand

## Patentansprüche

1. Spinnereivorbereitungsanlage, umfassend zumindest eine Putzerei-(41) oder Öffnerlinie mit mindestens einer steuerbaren Maschine, sowie mindestens zwei Karden (100), wobei die jeweilige Karde (100) mindestens einen Sensor (30) zur Erfassung von störenden Partikeln, insbesondere Trashteile, Nissen, Schalennissen, Dickstellen und/oder Fremdteilen in dem kardierten Faserflor (16) aufweist, **dadurch gekennzeichnet, dass** Daten der Sensoren (30) der Karden (100) in einer Steuerung (43) zusammengefasst und ausgewertet werden, wobei über ein Eingabemodul (44) zumindest eine Führungsgröße für die Faserqualität der Steuerung (43) zuführbar ist und die Steuerung (43) eine Stellgröße an eine Steuerung (42a) der steuerbaren Maschine übermittelt.

2. Spinnereivorbereitungsanlage nach Anspruch 1, **dadurch gekennzeichnet, dass** die steuerbare Maschine als Fremdteilausscheider (42) oder Mischer oder Reiniger ausgebildet ist.

3. Spinnereivorbereitungsanlage nach Anspruch 1, **dadurch gekennzeichnet, dass** die Steuerung (43) ausgebildet ist, bei fehlerhaftem Faserflor ein optisches, akustisches oder elektrisches Signal auszugeben.

4. Spinnereivorbereitungsanlage nach einem der Ansprüche 1 bis 3, **dadurch gekennzeichnet, dass** die Karden (100) je eine Vorrichtung zum Erkennen von störenden Partikeln, insbesondere Trashteile, Nissen, Schalennissen, Dickstellen und/oder Fremdteilen in dem kardierten Faserflor (16) aufweist, wobei die Vorrichtung mindestens drei der Sensoren (30), vorzugsweise mindestens fünf der Sensoren (30), besonders bevorzugt mindestens neun der Sensoren (30) innerhalb eines Vliesleitelementes (20) aufweist und die Sensoren (30) ortsfest innerhalb des Vliesleitelementes (20) angeordnet sind, das im Übergang von einem Abnehmer (5) zu einer Abstreichwalze (6) angeordnet ist, wobei die Sensoren (30) den Faserflor (16) auf dem Abnehmer (5) detektieren, wobei das Vliesleitelement (20) eine zum Abnehmer (5) hin angeordnete Vorderseite (20a) mit mindestens einem lichtdurchlässigen Element (20b) aufweist.

5. Spinnereivorbereitungsanlage nach einem der Ansprüche 1 bis 4, **dadurch gekennzeichnet, dass** jeder Sensor (30) eine Sensorplatine (36) mit einem Objektiv (37) aufweist, wobei zwischen der Sensorplatine (36) und dem Polarisationsfilter (31) ein Rechner, eine Trägerplatte (33) und eine Beleuchtungseinheit (34) angeordnet sind.

6. Spinnereivorbereitungsanlage nach Anspruch 5, **dadurch gekennzeichnet, dass** das Objektiv (37) eine Platte mit dem Rechner (35), die Trägerplatte (33) und die Beleuchtungseinheit (34) durchdringt.

7. Spinnereivorbereitungsanlage nach Anspruch 5 oder 6, **dadurch gekennzeichnet, dass** die Trägerplatte (33) ausgebildet ist, den Rechner (35) und die Sensorplatine (36) vor elektromagnetischer Strahlung zu schützen.

8. Verfahren zur Erfassung von störenden Partikeln, insbesondere Trashteile, Nissen, Schalennissen, Dickstellen und/oder Fremdteilen in einem kardierten Faserflor mittels Sensoren (30), wobei die Daten der Sensoren (30) der Karden in einer Steuerung (43) der Spinnereivorbereitungsanlage nach einem der Ansprüche 1 bis 7 zusammengefasst und ausgewertet werden und mit einer Führungsgröße abgeglichen werden, wobei die Steuerung (43) ausgebildet ist, mit der Steuerung (42a) einer vorgelagerten steuerbaren Maschine (42) zu kommunizieren.

9. Verfahren nach Anspruch 8, **dadurch gekennzeichnet, dass** die steuerbare Maschine als Fremdteilausscheider (42) oder Mischer oder Reiniger ausgebildet ist.

## Claims

1. A spinning mill preparation, comprising at least one blow room (41) or opening line with at least one controllable machine, as well as at least two cards (100), wherein the respective card (100) includes at least one sensor (30) for capturing interfering particles, in particular trash parts, neps, shell neps, thick spots and/or foreign parts in the carded fibre web (16), **characterized in that** the sensor data are combined and evaluated in a control (43), wherein at least one reference variable for the fibre quality can be input to the control (43) via an input module (44), and the control (43) transmits a modified variable to the control (42a) of the controllable machine.

2. The spinning mill preparation according to claim 1, **characterized in that** the controllable machine is formed as a foreign parts separator (42) or a blender or a cleaner.

3. The spinning mill preparation according to claim 1, **characterized in that** the control (43) is formed for issuing a visual, acoustic or electric signal for faulty fibre web.

4. The spinning mill preparation according to any of claims 1 to 3, **characterized in that** the cards (100) each comprise a device for recognizing interfering particles, in particular trash parts, neps, shell neps, thick spots and/or foreign parts in a carded fibre web (16), wherein the device comprises at least three sensors (30), preferably at least five sensors (30), particularly preferred at least nine sensors (30), which are stationarily disposed within a web guiding element (20), which is disposed at the transition from a doffer (5) to a stripper roll (6), wherein the sensors (30) detect the fibre web (16) on the doffer (5), wherein the web guiding element (20) has a front side (20a), which is disposed towards the doffer (5), with at least one light-transmissible element (20b).

5. The spinning mill preparation according to any of claims 1 to 4, **characterized in that** each sensor (30) includes a sensor board (36) with a lens (37), wherein a computer, a carrier board (33) and an illumination unit (34) are disposed between the sensor board (36) and the polarizing filter (31).

6. The spinning mill preparation according to claim 5, **characterized in that** the lens (37) penetrates a board with the computer (35), the carrier board (33) and the illumination unit (34).

7. The spinning mill preparation according to claim 5 or 6, **characterized in that** the carrier board (33) is formed for protecting the computer (35) and the sensor board (36) from electromagnetic radiation.

8. A method of capturing interfering particles, in particular trash parts, neps, shell neps, thick spots and/or foreign parts in a carded fibre web by means of sensors (30), wherein the data of the sensors (30) of the cards are combined and evaluated in a control (43) of the spinning mill preparation according to any of claims 1 to 7 and compared to a reference variable, wherein the control (43) is formed for communicating with the control (42a) of an upstream controllable machine (42).

9. The method according to claim 8, **characterized in that** the controllable machine is formed as a foreign parts separator (42) or a blender or a cleaner.

## Revendications

1. Installation de préparation pour filature, comportant au moins une ligne de nettoyage (41) ou d'ouvraison avec au moins une machine pilotable, ainsi qu'au moins deux cardes (100), dans laquelle la carde (100) respective présente au moins un capteur (30) pour détecter des particules gênantes, notamment des impuretés, des neps, des neps capsules, des grosseurs et/ou des corps étrangers dans le voile de fibres (16) cardé, **caractérisée en ce que** des données des capteurs (30) des cardes (100) sont rassemblées et analysées dans une commande (43), dans laquelle au moins une grandeur de référence relative à la qualité des fibres peut être envoyée à la commande (43) via un module de saisie (44) et la commande (43) transmet une valeur de réglage à une commande (42a) de la machine pilotable.

2. Installation de préparation pour filature selon la revendication 1, **caractérisée en ce que** la machine pilotable est conçue comme séparateur de corps étrangers (42) ou mélangeuse ou nettoyeuse.

3. Installation de préparation pour filature selon la revendication 1, **caractérisée en ce que** la commande (43) est conçue pour émettre un signal visuel, acoustique ou électrique en cas de voile de fibres défectueux.

4. Installation de préparation pour filature selon l'une des revendications 1 à 3, **caractérisée en ce que** les cardes (100) comportent chacune un dispositif de détection de particules gênantes, notamment d'impuretés, de neps, de neps capsules, de grosseurs et/ou de corps étrangers dans le voile de fibres (16) cardé, dans laquelle le dispositif comporte au moins trois des capteurs (30), de préférence au moins cinq des capteurs (30), de façon particulièrement préférée au moins neuf des capteurs (30) à l'intérieur d'un élément de guidage du voile (20) et que les capteurs (30) sont disposés de manière fixe à l'intérieur de l'élément de guidage du voile (20) qui est disposé dans la transition entre un peigneur (5) et un rouleau détacheur (6), dans laquelle les capteurs (30) détectent le voile de fibres (16) sur le peigneur (5), dans laquelle l'élément de guidage du voile (20) comporte une face avant (20a) disposée vers le peigneur (5) avec au moins un élément translucide (20b).

5. Installation de préparation pour filature selon l'une des revendications 1 à 4, **caractérisée en ce que** chaque capteur (30) présente une platine de capteur (36) avec un objectif (37), dans laquelle un ordinateur, une plaque de support (33) et un dispositif d'éclairage (34) sont disposés entre la platine de capteur (36) et le filtre de polarisation (31).

6. Installation de préparation pour filature selon la revendication 5, **caractérisée en ce que** l'objectif (37) traverse une plaque avec l'ordinateur (35), la plaque de support (33) et le dispositif d'éclairage (34).

7. Installation de préparation pour filature selon la revendication 5 ou 6, **caractérisée en ce que** la plaque de support (33) est conçue pour protéger l'ordinateur (35) et la platine de capteur (36) des rayonnements électromagnétiques.

8. Procédé de détection de particules gênantes, notamment d'impuretés, de neps, de neps capsules, de grosseurs et/ou de corps étrangers dans un voile de fibres cardé au moyen de capteurs (30), dans lequel les données des capteurs (30) des cardes sont rassemblées et analysées dans une commande (43) de l'installation de préparation pour filature selon l'une des revendications 1 à 7 et ajustées à l'aide d'une grandeur de référence, dans lequel la commande (43) est conçue pour communiquer avec la commande (42a) d'une machine pilotable (42) située en amont.

9. Procédé selon la revendication 8, **caractérisé en ce que** la machine pilotable est conçue comme séparateur de corps étrangers (42) ou mélangeuse ou nettoyeuse.
